(19) Europäisches Patentamt
European Patent Office
Office européen des brevets

(11) **EP 4 588 962 A1**

(12) **EUROPEAN PATENT APPLICATION**
published in accordance with Art. 153(4) EPC

(43) Date of publication:
**23.07.2025 Bulletin 2025/30**

(21) Application number: 23865433.9

(22) Date of filing: **08.09.2023**

(51) International Patent Classification (IPC):
*C08J 5/18* (2006.01)   *B29C 55/12* (2006.01)
*B32B 15/085* (2006.01)   *C08L 23/12* (2006.01)
*H01G 4/32* (2006.01)

(52) Cooperative Patent Classification (CPC):
B29C 55/12; B32B 15/085; C08J 5/18; C08L 23/12;
H01G 4/32

(86) International application number:
**PCT/JP2023/032921**

(87) International publication number:
**WO 2024/058078 (21.03.2024 Gazette 2024/12)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **16.09.2022 JP 2022148603**

(71) Applicant: Oji Holdings Corporation
Chuo-ku
**Tokyo 104-0061 (JP)**

(72) Inventors:
• **YONEDA, Yoshihiko**
**Tokyo 104-0061 (JP)**
• **ISHIDA, Tatsuji**
**Tokyo 104-0061 (JP)**
• **ISHIWATA, Tadakazu**
**Tokyo 104-0061 (JP)**

(74) Representative: **Müller-Boré & Partner
Patentanwälte PartG mbB
Friedenheimer Brücke 21
80639 München (DE)**

(54) **BIAXIALLY STRETCHED POLYPROPYLENE FILM, METALLIZED FILM, AND CAPACITOR**

(57)    The present invention provides a biaxially stretched polypropylene film that exhibits high dielectric breakdown strength even at high temperatures, as well as a metallized film and a capacitor that use the biaxially stretched polypropylene film. Specifically, the present invention provides a biaxially stretched polypropylene film containing a linear polypropylene resin A and a branched polypropylene resin B, wherein (1) the ratio by mass of the linear polypropylene resin A to the branched polypropylene resin B, which is represented by the linear polypropylene resin A/the branched polypropylene resin B, is within the range of 99.0:1.0 to 85.0:15.0, (2) the linear polypropylene resin A has a molecular weight distribution (Mw/Mn) of weight average molecular weight Mw and number average molecular weight Mn of 7.0 or more and 9.3 or less, and (3) the biaxially stretched polypropylene film has a storage modulus (E') of 22.50 MPa or more and 31.00 MPa or less at a vibration frequency of 1 Hz and a temperature of 160°C.

Fig. 1

DRAWINGS

**Description**

Technical Field

The present invention relates to a biaxially stretched polypropylene film, a metallized film, and a capacitor.

Background Art

Biaxially stretched polypropylene films have been used in electrical appliances. Due to their excellent electrical properties, such as voltage resistance, biaxially stretched polypropylene films are used in dielectric films for capacitors.
A capacitor manufactured from such a dielectric film for capacitors can be used in, for example, inverters constituting a power control unit in vehicles, such as hybrid cars and electric cars.
Due to the recent trend toward smaller capacitors with higher capacity, biaxially stretched polypropylene films used in producing such capacitors need to be thinner and are required to exhibit high dielectric breakdown strength even with such low thickness.
For example, PTL 1 discloses a polypropylene film used in capacitors, containing a polypropylene resin with a melting peak in a specific range.

Citation List

Patent Literature

PTL 1: JP2007-084813A

Summary of Invention

Technical Problem

However, the polypropylene film disclosed in PTL 1 has insufficient heat resistance.
The capacitors as described above are used in an environment in which the temperature rises, such as an engine compartment, or in which the capacitors generate heat by themselves. Thus, those capacitors are required to have high heat resistance at high temperatures of about 120°C (e.g., 100°C to 125°C). More specifically, capacitors are required to maintain their insulation properties and capacitance without short-circuiting even at high temperatures.
The biaxially stretched polypropylene films for producing such capacitors are required to exhibit high dielectric breakdown strength even at high temperatures.
Accordingly, there is demand for the development of a biaxially stretched polypropylene film exhibiting high dielectric breakdown strength even at high temperatures and a metallized film using the biaxially stretched polypropylene film; additionally, there is also demand for the development of a capacitor capable of maintaining insulation properties and capacitance even at high temperatures.
An object of the present invention is to provide a biaxially stretched polypropylene film exhibiting high dielectric breakdown strength even at high temperatures, a metallized film using the biaxially stretched polypropylene film, and a capacitor using the biaxially stretched polypropylene film.

Solution to Problem

As a result of conducting extensive research to achieve the above object, the present inventors found that the object can be achieved by a biaxially stretched polypropylene film containing a linear polypropylene resin A and a branched polypropylene resin B, with the ratio by mass of the linear polypropylene resin A to the branched polypropylene resin B and the molecular weight distribution (Mw/Mn) of the linear polypropylene resin A falling within specific ranges, as well as having a specific storage modulus. The inventors then completed the present invention.
Specifically, the present invention relates to the following biaxially stretched polypropylene film, metallized film, and capacitor.

1. A biaxially stretched polypropylene film comprising a linear polypropylene resin A and a branched polypropylene resin B, wherein

(1) the ratio by mass of the linear polypropylene resin A to the branched polypropylene resin B, which is represented by the linear polypropylene resin A/the branched polypropylene resin B, is within the range of 99.0:1.0 to 85.0:15.0,

(2) the linear polypropylene resin A has a molecular weight distribution (Mw/Mn) of weight average molecular weight Mw and number average molecular weight Mn of 7.0 or more and 9.3 or less, and

(3) the biaxially stretched polypropylene film has a storage modulus (E') of 22.50 MPa or more and 31.00 MPa or less at a vibration frequency of 1 Hz and a temperature of 160°C.

2. The biaxially stretched polypropylene film according to Item 1, wherein the ratio by mass of the linear polypropylene resin A to the branched polypropylene resin B, which is represented by the linear polypropylene resin A/the branched polypropylene resin B, is within the range of 96.9:3.1 to 85.0:15.0.

3. The biaxially stretched polypropylene film according to Item 1 or 2, wherein the branched polypropylene resin B has a melt flow rate at 230°C of 2.0 g/10 min or more.

4. The biaxially stretched polypropylene film according to any one of Items 1 to 3, wherein the branched polypropylene resin B has a melt tension at 230°C of 9 g/cm$^3$ or more and 20 g/cm$^3$ or less.

5. The biaxially stretched polypropylene film according to any one of Items 1 to 4, wherein the storage modulus (E') is 22.97 MPa or more and 27.53 MPa or less.

6. The biaxially stretched polypropylene film according to any one of Items 1 to 5, wherein the linear polypropylene resin A contains a linear polypropylene resin having a heptane-insoluble (HI) content of 98.5% or more.

7. The biaxially stretched polypropylene film according to any one of Items 1 to 6,
wherein

the linear polypropylene resin A contains two types of linear polypropylene resins, which are a linear polypropylene resin A1 and a linear polypropylene resin A2,
the linear polypropylene resin A1 has a mesopentad fraction of less than 98.0%, and
the linear polypropylene resin A2 has a mesopentad fraction of 98.0% or more.

8. The biaxially stretched polypropylene film according to any one of Items 1 to 7, wherein the biaxially stretched polypropylene film has a dielectric breakdown strength of 448 V/$\mu$m or more under DC voltage at 120°C (DCES 120°C).

9. The biaxially stretched polypropylene film according to any one of Items 1 to 8, wherein the biaxially stretched polypropylene film has a melting peak temperature of 166°C or higher and 188°C or lower when initially heated from 30°C to 280°C at a rate of 20°C/min in a nitrogen atmosphere in differential scanning calorimetry.

10. The biaxially stretched polypropylene film according to any one of Items 1 to 9, wherein the biaxially stretched polypropylene film has a crystallization peak temperature of 112°C or higher and lower than 120°C when initially heated from 30°C to 280°C at a rate of 20°C/min in a nitrogen atmosphere, then kept at 280°C for 5 minutes, and initially cooled to 30°C at a rate of 20°C/min in differential scanning calorimetry.

11. The biaxially stretched polypropylene film according to any one of Items 1 to 10, wherein the biaxially stretched polypropylene film in the form of a cast sheet before biaxial stretching has a β-crystal fraction of 10% or more, the β-crystal fraction being the percentage of β-crystals in the total of α-crystals and the β-crystals.

12. The biaxially stretched polypropylene film according to any one of Items 1 to 11, which is for use in a capacitor.

13. A metallized film comprising a metal layer on at least one surface of the biaxially stretched polypropylene film of any one of Items 1 to 12.

14. The metallized film according to Item 13, having a thickness of 1.8 $\mu$m or more and 3.0 $\mu$m or less.

15. A capacitor comprising the metallized film of Item 13 or 14.

Advantageous Effects of Invention

The biaxially stretched polypropylene film of the present invention can exhibit high dielectric breakdown strength even at high temperatures. Additionally, the present invention can provide a metallized film and a capacitor using the biaxially stretched polypropylene film.

Brief Description of Drawings

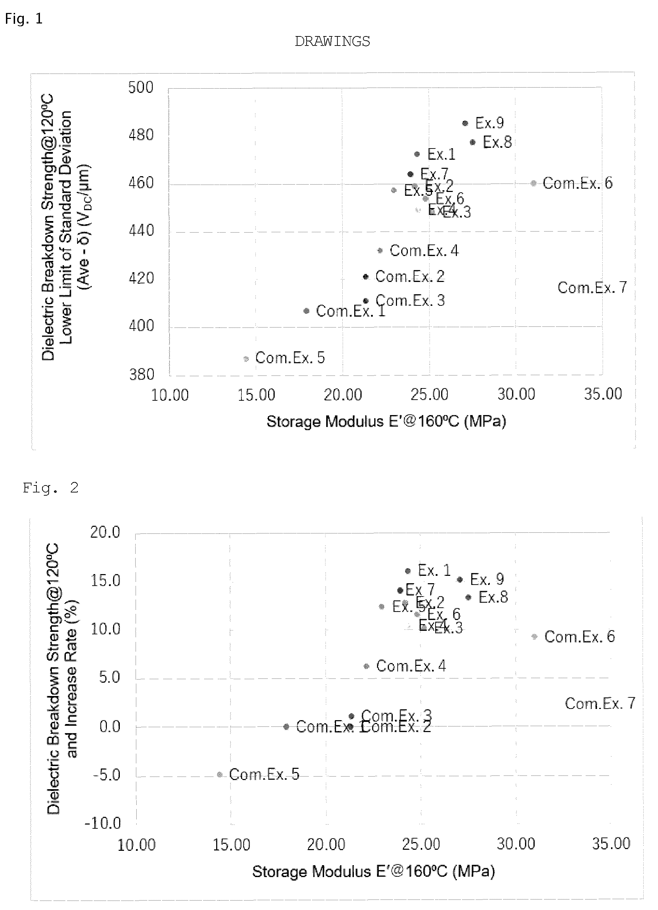

Fig. 1 is a graph showing the relationship between the storage modulus (horizontal axis) and the dielectric breakdown strength at 120°C (vertical axis) of each biaxially stretched polypropylene film produced in the Examples and Comparative Examples.
Fig. 2 is a graph showing the relationship between the storage modulus (horizontal axis) and the improvement rate of dielectric breakdown strength at 120°C (vertical axis) of each biaxially stretched polypropylene film produced in the Examples and Comparative Examples. Examples 1 to 7 show improvement rates relative to Comparative Example 1, and Examples 8 and 9 show improvement rates relative to Comparative Example 2.

Description of Embodiments

In the present specification, the term "to" in a numerical range means "or more" and "or less." That is, the expression "α to β" means "α or more and β or less," or "β or more and α or less," and includes α and β in the range. When multiple lower limit values and multiple upper limit values are listed separately, any combination of a lower limit value and an upper limit value may be selected and paired with "to."
In the present specification, the terms "comprise" and "contain" include the concepts of comprising, containing, consisting essentially of, and consisting of.
In the present specification, the term "capacitor" includes the concepts of "capacitor," "capacitor element," and "film capacitor."
In the present specification, the directions of the biaxially stretched polypropylene film are as follows. First, the machine direction of the film may be referred to as "MD direction" below. The MD direction may also be referred to as the "length direction" or the "flow direction." Second, the lateral direction of the film is the transverse direction ("TD direction" below). The TD direction may also be referred to as the "width direction."

1. Biaxially Stretched Polypropylene Film

The biaxially stretched polypropylene film of the present invention comprises a linear polypropylene resin A and a branched polypropylene resin B,
wherein

(1) the ratio by mass of the linear polypropylene resin A to the branched polypropylene resin B, which is represented by the linear polypropylene resin A/the branched polypropylene resin B, is within the range of 99.0:1.0 to 85.0:15.0,
(2) the linear polypropylene resin A has a molecular weight distribution (Mw/Mn) of weight average molecular weight Mw and number average molecular weight Mn of 7.0 or more and 9.3 or less, and
(3) the biaxially stretched polypropylene film has a storage modulus (E') of 22.50 MPa or more and 31.00 MPa or less at a vibration frequency of 1 Hz and a temperature of 160°C. The biaxially stretched polypropylene film of the present invention with these characteristics can exhibit high dielectric breakdown strength even at high temperatures.

Although the action of the present invention is unclear, it is presumed that the action of the present invention is influenced by the fact that the entanglement effect (pseudo-crosslinking effect) and the crystallization effect of the molecular chains of the polypropylene constituting the biaxially stretched polypropylene film are promoted; this is because the biaxially stretched polypropylene film of the present invention contains a linear polypropylene resin A and a branched polypropylene resin B, (1) the ratio by mass of the linear polypropylene resin A to the branched polypropylene resin B, which is represented by the linear polypropylene resin A/the branched polypropylene resin B, is within the range of 99.0:1.0 to 85.0:15.0, and (2) the linear polypropylene resin A has a molecular weight distribution (Mw/Mn) of weight average molecular weight Mw and number average molecular weight Mn of 7.0 or more and 9.3 or less.
For example, a molecular weight distribution (Mw/Mn) of the linear polypropylene resin A within the specific range of 7.0 or more and 9.3 or less contributes to promoting the entanglement effect of the molecular chains of polypropylene. A molecular weight distribution (Mw/Mn) of the linear polypropylene resin A within the specific range of 7.0 or more and 9.3 or less is also likely to result in the effect of high degrees of mechanical strength (stretching stress suitable for promoting oriented crystallization) due to the effect of molecular fluidity.

The branched polypropylene resin B also acts like a crystal-nucleating agent. The branched polypropylene resin B added in a specific amount also contributes to promoting the entanglement effect and the crystallization effect of the molecular chains of polypropylene. However, the branched polypropylene resin B added in an excessive amount promotes crystallization and physical crosslinking but interferes with the crystallinity instead, likely leading to a large storage modulus exceeding a predetermined range (the storage modulus (E') at a vibration frequency of 1 Hz and a temperature of 160°C being 22.50 MPa or more and 31.00 MPa or less), and making it difficult to achieve the effect of increasing dielectric breakdown strength at high temperatures. Therefore, in order to ensure the storage modulus within a predetermined range and thereby achieve high dielectric breakdown strength at high temperatures as a synergistic effect of the entanglement effect and crystallization effect of the molecular chains of polypropylene, it is necessary to set the ratio by mass of the linear polypropylene resin A to the branched polypropylene resin **B,** which is represented by linear polypropylene resin A/branched polypropylene resin B, within the range of 99.0:1.0 to 85.0:15.0.

Furthermore, the branched polypropylene resin B added allows a large amount of β crystals to form in a cast sheet before biaxial stretching. Stretching the cast sheet containing β crystals allows the β crystals to transform into α crystals, and the difference in density between β crystals and α crystals allows (substantially) arc-shaped irregularities to form in the polypropylene film obtained by stretching, thereby preferably roughening the surface. From this viewpoint as well, the biaxially stretched polypropylene film of the present invention is suitable as a material for dielectric films for capacitors.

It is sufficient if the biaxially stretched polypropylene film of the present invention has a storage modulus (E') at a vibration frequency of 1 Hz and a temperature of 160°C of 22.50 MPa or more and 31.00 MPa or less, preferably 26.00 MPa or more and 31.00 MPa or less, and more preferably 26.00 MPa or more and 29.00 MPa or less. A storage modulus within this range is likely to result in high dielectric breakdown strength at high temperatures. For example, the biaxially stretched polypropylene film of the present invention can exhibit high dielectric breakdown strength of 440 Vdc/μm or more (preferably 470 Vdc/μm or more) even at a high temperature of 120°C. The storage modulus (E') and the dielectric breakdown strength are measured according to the methods described in the Examples.

The biaxially stretched polypropylene film of the present invention has a melting peak temperature of preferably 166°C or higher and 188°C or lower when initially heated from 30°C to 280°C at a rate of 20°C/min in a nitrogen atmosphere in differential scanning calorimetry (DSC). The biaxially stretched polypropylene film of the present invention also preferably has a crystallization peak temperature of 112°C or higher and lower than 120°C (119.9°C or lower) when initially heated from 30°C to 280°C at a rate of 20°C/min in a nitrogen atmosphere, then kept at 280°C for 5 minutes, and initially cooled to 30°C at a rate of 20°C/min in differential scanning calorimetry. The melting peak temperature during the initial heating and the crystallization peak temperature during the initial cooling in DSC are measured according to the methods described in the Examples. In the present specification, the initial heating and initial cooling are collectively referred to below as "first run."

The biaxially stretched polypropylene film of the present invention is described in detail below.

The biaxially stretched polypropylene film of the present invention contains a linear polypropylene resin A and a branched polypropylene resin B, wherein

(1) the ratio by mass of the linear polypropylene resin A to the branched polypropylene resin B, which is represented by linear polypropylene resin A/branched polypropylene resin B, is within the range of 99.0:1.0 to 85.0:15.0; and
(2) the linear polypropylene resin A has a molecular weight distribution (Mw/Mn) of weight average molecular weight Mw and number average molecular weight Mn of 7.0 or more and 9.3 or less.

From the viewpoint of further decreasing the size and increasing the capacity of a capacitor containing the biaxially stretched polypropylene film of the present invention, the upper limit of the thickness of the biaxially stretched polypropylene film is preferably 6.0 μm or less, more preferably 5.5 μm or less, even more preferably 3.5 μm or less, particularly preferably 3.0 μm or less, and most preferably 2.8 μm or less. From the viewpoint of production, the lower limit is preferably 0.8 μm or more, more preferably 1.0 μm or more, even more preferably 1.8 μm or more, and particularly preferably 2.0 μm or more. The method for measuring the thickness of the biaxially stretched polypropylene film in the present specification is described in the Examples.

The density of the biaxially stretched polypropylene film is not particularly limited, and is preferably 919 kg/m³ or more and 930 kg/m³ or less, from the viewpoint of easier application in capacitors.

The biaxially stretched polypropylene film of the present invention contains a linear polypropylene resin A and a branched polypropylene resin B. Of these, the linear polypropylene resin A has a molecular weight distribution (Mw/Mn) of weight average molecular weight Mw and number average molecular weight Mn of 7.0 or more and 9.3 or less, and preferably 8.1 or more and 9.3 or less.

In regards to the relationship between the linear polypropylene resin A and the branched polypropylene resin B, the linear polypropylene resin A, which is present in a larger amount, is referred to as "main polypropylene resin" or "base resin," while the branched polypropylene resin B, which is present in a relatively small amount, is referred to as "blend resin."

The linear polypropylene resin A may be a single type of resin or a mixed resin of two or more types (particularly two types). For example, the linear polypropylene resin A may be one type of linear polypropylene resin A1 described below, or may be a mixed resin of the linear polypropylene resin A1 and a linear polypropylene resin A2 described below. In this case, the linear polypropylene resin A1, which is present in a large amount, is referred to as "base resin," and the linear polypropylene resin A2, which is present in a relatively small amount, is referred to as "blend resin."

Linear Polypropylene Resin A1

In the biaxially stretched polypropylene film of the present invention, the linear polypropylene resin A can be composed of one type of linear polypropylene resin A1 described in this section. The linear polypropylene resin A1 for use can be a crystalline polypropylene, such as isotactic polypropylene or syndiotactic polypropylene.

The linear polypropylene resin A1 has a weight average molecular weight Mw of preferably 250000 or more and 360000 or less, more preferably 280000 or more and 350000 or less, even more preferably 300000 or more and 350000 or less, and particularly preferably 300000 or more and less than 350000. A weight average molecular weight Mw of the linear polypropylene resin A1 within the range makes it easier to control the thickness of a cast sheet before biaxial stretching in the production process of the biaxially stretched polypropylene film, thus making it less likely to result in uneven thickness.

The weight average molecular weight Mw of the linear polypropylene resin A1 is a property of the linear polypropylene resin A1 as a raw material resin. Similarly, the number average molecular weight Mn, Z-average molecular weight Mz, molecular weight distribution (Mw/Mn), molecular weight distribution (Mz/Mn), melt flow rate at 230°C (MFRA1), melt tension at 230°C, mesopentad fraction ([mmmm]), and heptane-insoluble (HI) content of the linear polypropylene resin A1, described below, are also properties of the linear polypropylene resin A1 as a raw material resin.

The linear polypropylene resin A1 has a number average molecular weight Mn of preferably 30000 or more and 54000 or less, more preferably 33000 or more and 52000 or less, and even more preferably 33000 or more and 47000 or less. A number average molecular weight Mn of the linear polypropylene resin A1 within the range leads to further improved heat resistance of the capacitor produced.

The linear polypropylene resin A1 has a Z-average molecular weight Mz of preferably 1 million or more and 2 million or less, and more preferably 1.25 million or more and 1.8 million or less. A Z-average molecular weight Mz of the linear polypropylene resin A1 within the range leads to further improved dielectric breakdown strength of the biaxially stretched polypropylene film at high temperatures.

The linear polypropylene resin A1 has a molecular weight distribution (Mw/Mn) of 7.0 or more and 9.3 or less. In particular, the lower limit can be set to preferably 7.2 or more, more preferably 7.3 or more, and even more preferably 8.1 or more. The upper limit can be set preferably to 9.0 or less, and more preferably to 8.2 or less. A molecular weight distribution Mw/Mn within the range leads to further improved stretchability of the polypropylene film, enabling the production of a thinner biaxially stretched polypropylene film. Additionally, a molecular weight distribution Mw/Mn within the range makes it easier to set the storage modulus of the biaxially stretched polypropylene film within a predetermined range.

The linear polypropylene resin A1 has a molecular weight distribution (Mz/Mn) of preferably 10 or more and 100 or less, more preferably 15 or more and 70 or less, and even more preferably 15 or more and 60 or less. A molecular weight distribution Mz/Mn within the range leads to further improved stretchability of the polypropylene film, enabling the production of a thinner biaxially stretched polypropylene film.

The linear polypropylene resin A1 has a melt flow rate at 230°C (MFRA1) of preferably 3.0 g/10 min or more, and more preferably 3.5 g/10 min or more. The linear polypropylene resin A1 also has a melt flow rate (MFRA1) at 230°C of preferably 10.0 g/10 min or less, more preferably 8.0 g/10 min or less, even more preferably 6.0 g/10 min or less, and particularly preferably 5.0 g/10 min or less. A melt flow rate (MFRA1) at 230°C of the linear polypropylene resin A1 within the range leads to further improved dielectric breakdown strength of the biaxially stretched polypropylene film at high temperatures. The method for measuring the melt flow rate (MFR) of a resin at 230°C in the present specification is described in the Examples.

The linear polypropylene resin A1 has a melt tension at 230°C of preferably 1.0 g or less, and more preferably less than 1.0 g. A melt tension at 230°C of the linear polypropylene resin A within the range leads to excellent flow properties of the resin in a molten state, making it unlikely for unstable flow, such as melt fracture, to occur. This results in excellent uniformity of the film thickness, advantageously preventing the formation of thin-walled portions prone to dielectric breakdown. In the present specification, the melt tension of resin at 230°C is measured according to the method described in the Examples.

The linear polypropylene resin A1 has a mesopentad fraction ([mmmm]) of preferably 99.8% or less, more preferably 99.5% or less, even more preferably 99.0% or less, and most preferably less than 98.0%. The linear polypropylene resin A1 also has a mesopentad fraction of preferably 94.0% or more, more preferably 94.5% or more, and even more preferably 95.0% or more. A mesopentad fraction within the range leads to improved crystallinity of polypropylene resin due to moderately high stereoregularity, further improved voltage resistance of the biaxially stretched polypropylene film at high temperatures, and a moderate rate of solidification (crystallization) during cast-sheet molding, allowing for moderate stretchability. The method for measuring the mesopentad fraction ([mmmm]) of resin in the present specification is described in the Examples.

The linear polypropylene resin A1 has a heptane-insoluble (HI) content of preferably 97.0% or more, more preferably 97.5% or more, even more preferably 98.0% or more, and particularly preferably 98.5% or more. The linear polypropylene resin A1 also has a heptane-insoluble (HI) content of preferably 99.5% or less, and more preferably 99.0% or less. A higher heptane-insoluble content indicates a higher degree of stereoregularity of the resin. A heptane-insoluble content within the range leads to moderately improved crystallinity of the polypropylene resin in the polypropylene film due to moderately high stereoregularity, thus improving dielectric breakdown strength at high temperatures. Additionally, a heptane-insoluble content within the range also leads to a moderate rate of solidification (crystallization) during cast-sheet molding before biaxial stretching in the production process of the polypropylene film, thus allowing for moderate stretchability. The method for measuring the heptane-insoluble (HI) content of resin in the present specification is described in the Examples.

Typical commercially available products of the linear polypropylene resin A1 include, for example, HC300BF manufactured by Borealis AG and HPT-1 manufactured by Korea Petrochemical Ind. Co., Ltd.

Linear Polypropylene Resin A2

In another embodiment of the biaxially stretched polypropylene film of the present invention, the linear polypropylene resin A can be formed of a mixed resin containing the linear polypropylene resin A1 as a base resin and a linear polypropylene resin A2 as a blend resin. The linear polypropylene resin A2 for use may also be a crystalline polypropylene, such as isotactic polypropylene and syndiotactic polypropylene, like the linear polypropylene resin A1.

In the linear polypropylene resin A, the mixing ratio of the linear polypropylene resin A1 (base resin) to the linear polypropylene resin A2 (blend resin) is not limited as long as the blend resin is contained in a smaller amount. The amount of the linear polypropylene resin A2 is preferably less than 50 mass%, more preferably 49 mass% or less, and even more preferably 40 mass% or less based on the linear polypropylene resin A taken as 100 mass%. The amount of the linear polypropylene resin A2 is also preferably 10 mass% or more, more preferably 15 mass% or more, even more preferably 25 mass% or more, and particularly preferably 30 mass% or more, based on the linear polypropylene resin A taken as 100 mass%.

The linear polypropylene resin A2 has a weight average molecular weight Mw of preferably 300000 or more, more preferably 350000 or more, even more preferably 360000 or more, and particularly preferably more than 360000. The linear polypropylene resin A2 also has a weight average molecular weight Mw of preferably 550000 or less, more preferably 450000 or less, and even more preferably 420000 or less. A weight average molecular weight Mw of the linear polypropylene resin A2 within the range makes it easier to control the thickness of a cast sheet before biaxial stretching in the production process of the biaxially stretched polypropylene film, thus making it less likely to result in uneven thickness.

The weight average molecular weight Mw of the linear polypropylene resin A2 is a property of the linear polypropylene resin A2 as a raw material resin. Similarly, the number average molecular weight Mn, Z-average molecular weight Mz, molecular weight distribution (Mw/Mn), molecular weight distribution (Mz/Mn), melt flow rate at 230°C (MFRA2), melt tension at 230°C, MFRA1-MFRA2, mesopentad fraction ([mmmm]), and heptane-insoluble (HI) content of the linear polypropylene resin A2, described below, are also properties of the linear polypropylene resin A2 as a raw material resin.

The linear polypropylene resin A2 has a number average molecular weight Mn of preferably 35000 or more and 54000 or less, more preferably 37000 or more and 50000 or less, and even more preferably 38000 or more and 48000 or less. A number average molecular weight Mn of the polypropylene resin A within the range leads to further improved heat resistance of the capacitor produced.

The linear polypropylene resin A2 has a Z-average molecular weight Mz of preferably more than 1.35 million and 2.0 million or less, and more preferably 1.4 million or more and 1.9 million or less. A Z-average molecular weight Mz of the linear polypropylene resin A2 within the range leads to further improved dielectric breakdown strength of the biaxially stretched polypropylene film at high temperatures.

The linear polypropylene resin A2 has a molecular weight distribution (Mw/Mn) of 7.0 or more and 9.3 or less. In particular, the lower limit can be set to preferably 8.1 or more, more preferably 8.2 or more, and even more preferably 8.3 or more. The upper limit can be set preferably to 9.2 or less, and more preferably to 9.1 or less. A molecular weight distribution Mw/Mn within the range leads to further improved stretchability of the polypropylene film, enabling the production of a thinner biaxially stretched polypropylene film. Additionally, a molecular weight distribution Mw/Mn within the range makes it easier to set the storage modulus of the biaxially stretched polypropylene film within a predetermined range.

The linear polypropylene resin A2 has a molecular weight distribution (Mz/Mn) of preferably 30 or more and 40 or less, and more preferably 33 or more and 37 or less. A molecular weight distribution Mz/Mn within the range leads to further improved stretchability of the polypropylene film, enabling the production of a thinner biaxially stretched polypropylene film.

The linear polypropylene resin A2 has a melt flow rate at 230°C (MFRA2) of preferably 4.0 g/10 min or less, more preferably 3.5 g/10 min or less, even more preferably 3.2 g/10 min or less, and particularly preferably less than 3.0 g/10 min. The linear polypropylene resin A2 also has a melt flow rate at 230°C (MFRA2) of preferably 0.1 g/10 min or more, more preferably 0.5 g/10 min or more, and even more preferably 1.5 g/10 min or more.

The difference between the MFR (MFRA1) of the linear polypropylene resin A1 as a base resin and the MFR (MFRA2) of the linear polypropylene resin A2 as a blend resin, which is represented by MFRA1 - MFRA2, is preferably 0.8 g/10 min or more. Specifically, it is preferred that MFRA1 is greater than MFRA2. The value of MFRA1 - MFRA2 is preferably 1.0 g/10 min or more, more preferably 1.5 g/10 min or more, and even more preferably 1.7 g/10 min or more. A value of MFRA1 - MFRA2 of less than 0.5 g/10 min ("less than 0.5 g/10 min," including negative values) does not allow a sea-island phase-separated structure to form during cast-sheet molding before biaxial stretching in the production process of the polypropylene film, or may result in a very small size of islands even if it is formed, making it difficult to eventually obtain a polypropylene film excellent in dielectric breakdown strength at high temperatures. In particular, if MFRA2 is greater (the value of MFRA1-MFRA2 being a negative value), even a large difference between MFRA1 and MFRA2 results in a very small size of islands of the sea-island phase-separated structure.

The linear polypropylene resin A2 has a melt tension at 230°C of preferably 1.0 g or less, and more preferably less than 1.0 g. A melt tension at 230°C of the linear polypropylene resin A2 within the range leads to excellent flow properties of the resin in a molten state, making it unlikely for unstable flow, such as melt fracture, to occur. This results in excellent uniformity of the film thickness, advantageously preventing the formation of thin-walled portions prone to dielectric breakdown. In the present specification, the melt tension of resin at 230°C is measured according to the method described in the Examples.

The linear polypropylene resin A2 has a mesopentad fraction ([mmmm]) of preferably 99.8% or less, more preferably 99.5% or less, and even more preferably 99.0% or less. The linear polypropylene resin A2 also has a mesopentad fraction of preferably 94.0% or more, more preferably 94.5% or more, even more preferably 95.0% or more, and most preferably 98.0% or more. A mesopentad fraction within the range leads to improved crystallinity of polypropylene resin due to moderately high stereoregularity, further improved voltage resistance of the biaxially stretched polypropylene film at high temperatures, and a moderate rate of solidification (crystallization) during cast-sheet molding, allowing for moderate stretchability. If the linear polypropylene resin A contains two types of resins, i.e., the linear polypropylene resin A1 and the linear polypropylene resin A2 (preferably a mixture of the linear polypropylene resin A1 and the linear polypropylene resin A2), the mesopentad fraction of the linear polypropylene resin A1 can be set to less than 98.0%, and the mesopentad fraction of the linear polypropylene resin A2 can be set to 98.0% or more.

The linear polypropylene resin A2 has a heptane-insoluble (HI) content of preferably 97.5% or more, more preferably 98.0% or more, even more preferably 98.5% or more, and particularly preferably 98.6% or more. The linear polypropylene resin A2 also has a heptane-insoluble content of preferably 99.5% or less, and more preferably 99.0% or less. The heptane-insoluble (HI) content of both the linear polypropylene resin A1 and the linear polypropylene resin A2 can be set to 98.5% or more.

Typical commercially available products of the linear polypropylene resin A2 include, for example, S802M manufactured by Korea Petrochemical Ind. Co., Ltd., and HPT-S manufactured by Korea Petrochemical Ind. Co., Ltd.

Branched Polypropylene Resin B

The biaxially stretched polypropylene film of the present invention contains a branched polypropylene resin B in addition to the linear polypropylene resin A, and the ratio by mass of the linear polypropylene resin A to the branched polypropylene resin B, which is represented by linear polypropylene resin A/branched polypropylene resin B, is within the range of 99.0:1.0 to 85.0:15.0.

Of the branched polypropylene resin B above, a branched polypropylene resin B obtained by polymerizing propylene by using a metallocene catalyst is preferred. Due to the branched polypropylene resin B in addition to the linear polypropylene resin A contained in the biaxially stretched polypropylene film, a large amount of β crystals is formed in the cast sheet before biaxial stretching. Stretching the cast sheet containing β crystals allows the β crystals to transform into α crystals, and the difference in density between β crystals and α crystals allows (substantially) arc-shaped irregularities to form in the polypropylene film obtained by stretching, thereby preferably roughening the surface. From this viewpoint as well, the biaxially stretched polypropylene film of the present invention is suitable as a material for dielectric films for capacitors.

If a branched polypropylene resin B obtained by crosslinking modification with a peroxide is used as the branched polypropylene resin **B,** rather than a branched polypropylene resin B polymerized using a metallocene catalyst, the α-crystal nucleating effect of the branched polypropylene resin B obtained by crosslinking modification with a peroxide promotes the formation of α-crystals and suppresses the formation of β-crystals in the cast sheet before biaxial stretching.

Stretching a cast sheet containing $\alpha$ crystals is unlikely to cause crystallite transition and is unlikely to form irregularities. Thus, in order to roughen the surface of a biaxially stretched polypropylene film, a branched polypropylene resin B polymerized by using a metallocene catalyst is suitably used. In this regard, the $\beta$ crystal fraction in a cast sheet containing a branched polypropylene resin B polymerized using a metallocene catalyst before biaxial stretching **(i.e.,** the percentage of $\beta$ crystals in the total of $\alpha$ crystals and $\beta$ crystals) is preferably 10% or more, more preferably 13% or more, even more preferably 15% or more, still more preferably 17% or more, and most preferably 19% or more. The method for measuring the $\beta$-crystal fraction in the present specification is described in the Examples.

The metallocene catalyst is typically a metallocene compound that forms a polymerization catalyst to produce olefin macromers. The branched polypropylene resin B obtained by polymerizing propylene by using a metallocene catalyst is preferred because it gives an appropriate branched chain length and an appropriate branched chain spacing of polypropylene, improves compatibility with linear polypropylene, and is likely to result in a more uniform composition and a more uniform surface shape.

Typical commercially available products of the branched polypropylene resin B include, for example, WAYMAX-EX6000 manufactured by Japan Polypropylene Corporation, WAYMAX-MFX6 manufactured by Japan Polypropylene Corporation, WAYMAX-MFX3 manufactured by Japan Polypropylene Corporation, WAYMAX-EX8000 manufactured by Japan Polypropylene Corporation, and WAYMAX-EX4000 manufactured by Japan Polypropylene Corporation.

The branched polypropylene resin B has a melt tension at 230°C of preferably 3 $g/cm^3$ or more and 25 $g/cm^3$ or less, more preferably 5 $g/cm^3$ or more and 20 $g/cm^3$ or less, even more preferably 9 $g/cm^3$ or more and 20 $g/cm^3$ or less, and particularly preferably 9 $g/cm^3$ or more and 17 $g/cm^3$ or less. A melt tension within the range leads to further improved dielectric breakdown strength of the biaxially stretched polypropylene film at high temperatures.

The branched polypropylene resin B has a melt flow rate at 230°C of preferably 0.1 to 12.0 g/10 min, more preferably 1.0 to 6.0 g/10 min, more preferably 1.5 to 4.0 g/10 min, and even more preferably 2.0 to 3.5 g/10 min. Thus, the melt flow rate of the branched polypropylene resin B at 230°C can be set to 2.0 g/10 min or more. A melt flow rate at 230°C within the range leads to excellent flow properties of the resin in a molten state, making it unlikely for unstable flow, such as melt fracture, to occur while further suppressing fracture during stretching. This results in excellent uniformity of the film thickness and thus prevents the formation of thin-walled portions prone to dielectric breakdown, thereby further improving dielectric breakdown strength of the biaxially stretched polypropylene film at high temperatures.

The branched polypropylene resin B has a weight average molecular weight Mw of preferably 150000 or more and 600000 or less, more preferably 200000 or more and 500000 or less, even more preferably 250000 or more and 500000 or less, and particularly preferably 350000 or more and 480000 or less. A weight average molecular weight Mw of the branched polypropylene resin B within the range leads to appropriate resin fluidity and makes it easier to control the thickness of a cast sheet, enabling the production of a thin stretched film. A weight average molecular weight Mw of the branched polypropylene resin B within the range also makes it less likely to result in uneven thickness of a cast sheet and a stretched film, providing more appropriate stretchability.

The branched polypropylene resin B has a number average molecular weight Mn of preferably 100000 or more and 300000 or less, more preferably 100000 or more and 250000 or less, and even more preferably 100000 or more and 200000 or less. A number average molecular weight Mn of the branched polypropylene resin B within the range leads to further improved heat resistance of the capacitor produced.

The branched polypropylene resin B has a molecular weight distribution (Mw/Mn) of preferably 1.5 or more and 4.5 or less, more preferably 1.8 or more and 4.5 or less, and even more preferably 2.0 or more and 4.2 or less. A molecular weight distribution Mw/Mn within the range leads to further improved stretchability of the polypropylene film, enabling the production of a thinner biaxially stretched polypropylene film.

The branched polypropylene resin B has a Z-average molecular weight Mz of preferably more than 700000 and 2 million or less, and more preferably 800000 or more and 1.7 million or less. A Z-average molecular weight Mz of the branched polypropylene resin B within the range leads to further improved dielectric breakdown strength of the biaxially stretched polypropylene film at high temperatures.

The branched polypropylene resin B has a molecular weight distribution (Mz/Mn) of preferably 4 or more and 30 or less, and more preferably 5 or more and 20 or less. A molecular weight distribution Mz/Mn within the range leads to further improved stretchability of the polypropylene film, enabling the production of a thinner biaxially stretched polypropylene film.

The molecular weight, molecular weight distribution, etc. of the branched polypropylene resin B can be controlled by adjusting the catalyst and polymerization conditions.

In regards to the amount of the branched polypropylene resin B, it is sufficient if the ratio by mass of the linear polypropylene resin A to the branched polypropylene resin B, which is represented by linear polypropylene resin A/branched polypropylene resin B, is within the range of 99.0:1.0 to 85.0:15.0; in particular, it is particularly preferred that the ratio by mass of the linear polypropylene resin A to the branched polypropylene resin B is within the range of 96.9:3.1 to 85.0:15.0. In regards to the ratio by mass, for example, if the linear polypropylene resin A is a mixture of the two resins, **i.e.,** the linear polypropylene resin A1 and the linear polypropylene resin A2 described above, it is preferable to set the amount of the linear polypropylene resin A1 to 55 mass% or more and 65 mass% or less, set the amount of the linear polypropylene resin A2 to 30 mass% or more and 40 mass% or less, and set the amount of the branched polypropylene resin B to 2 mass% or more and 10 mass% or less based on the total amount of the linear polypropylene resin A and the branched polypropylene resin B taken as 100 mass%. Setting the ratio of the resins in this manner makes it easier for the resulting biaxially stretched polypropylene film to achieve high dielectric breakdown strength even at high temperatures compared to conventional products.

Other Resins

The biaxially stretched polypropylene film of the present invention may contain resins other than the linear polypropylene resin A and the branched polypropylene resin B ("other resins" below). The "other resins" are resins other than the linear polypropylene resin A and the branched polypropylene resin B and are not particularly limited as long as a desired biaxially stretched polypropylene film can be obtained. Examples of other resins include polyolefins other than polypropylene, such as polyethylene, poly(1-butene), polyisobutene, poly(1-pentene), and poly(1-methylpentene); copolymers of $\alpha$-olefins, such as ethylene-propylene copolymers, propylene-butene copolymers, and ethylene-butene copolymers; vinyl monomer-diene monomer random copolymers, such as styrene-butadiene random copolymers; and vinyl monomer-diene monomer-vinyl monomer random copolymers, such as styrene-butadiene-styrene block copolymers. If the biaxially stretched polypropylene film contains other resins, the total amount of the linear polypropylene resin A and the branched polypropylene resin B is preferably 95 mass% or more, and more preferably 98 mass% or more, of the entire resin component taken as 100 mass%. In other words, the amount of other resins in 100 mass% of the entire resin component is preferably 5 mass% or less, and more preferably 2 mass% or less.

Additives

The biaxially stretched polypropylene film of the present invention may further contain additives. Examples of additives include antioxidants, chlorine absorbers, UV absorbers, lubricants, plasticizers, flame retardants, antistatic agents, and colorants.

Properties of Biaxially Stretched Polypropylene Film

The biaxially stretched polypropylene film of the present invention has a storage modulus (E') of 22.50 MPa or more and 31.00 MPa or less, preferably 22.50 MPa or more and 28.00 MPa or less, and even more preferably 22.97 MPa or more and 27.53 MPa or less at a vibration frequency of 1 Hz and a temperature of 160°C. A storage modulus (E') within the range makes it easier to achieve high dielectric breakdown strength at high temperatures.

The biaxially stretched polypropylene film of the present invention has a dielectric breakdown strength of 440 Vdc/$\mu$m or more, preferably 448 Vdc/$\mu$m or more, more preferably 460 V/$\mu$m or more, and particularly preferably 470 V/$\mu$m or more under DC voltage at 120°C (DCES120°C). Although a higher upper limit of dielectric breakdown strength under DC voltage at 120°C is preferred, the upper limit can be, for example, 650 V/$\mu$m or 630 V/$\mu$m.

The biaxially stretched polypropylene film of the present invention has a $\beta$-crystal fraction (i.e., the percentage of $\beta$-crystals in the total of $\alpha$-crystals and $\beta$-crystals) of preferably 10% or more, more preferably 13% or more, even more preferably 15% or more, even more preferably 17% or more, and most preferably 19% or more in a cast sheet form before biaxial stretching. The upper limit of the $\beta$-crystal fraction is preferably as large as possible, and is, for example, 50% or 40%. Setting the $\beta$-crystal fraction for a cast sheet to 10% or more allows (substantially) arc-shaped irregularities to form on the surface of the biaxially stretched polypropylene film of the present invention, making the surface suitably roughened, and thereby enhances the usefulness of the film as a dielectric film for capacitors.

The biaxially stretched polypropylene film of the present invention preferably has a melting peak temperature of 166°C or higher and 188°C or lower when initially heated from 30°C to 280°C at a rate of 20°C/min in a nitrogen atmosphere in differential scanning calorimetry (DSC). The lower limit is preferably 166°C or higher, more preferably 168°C or higher, and even more preferably 169°C or higher. A melting peak temperature in initial heating being 166°C or higher ensures that the lamellae have a thickness necessary for maintaining dielectric breakdown strength. The upper limit is preferably 188°C or lower, more preferably 187°C or lower, and even more preferably 185°C or lower. The upper limit of the melting peak temperature in initial heating is equal to or lower than the equilibrium melting point of polypropylene (the melting point when the lamella thickness is infinite), and is preferably 187°C or lower from the viewpoint of molding processability. The melting peak temperature is a value measured in the first run of differential scanning calorimetry and is specifically a value measured according to the method described in the Examples.

The biaxially stretched polypropylene film of the present invention has a fusion enthalpy of 105 J/g or more and 150 J/g or less when initially heated from 30°C to 280°C at a rate of 20°C/min in a nitrogen atmosphere in differential scanning calorimetry. The lower limit is preferably 105 J/g or more, more preferably 110 J/g or more, and even more preferably 115 J/g or more. A fusion enthalpy in initial heating being 105 J/g or more ensures the crystallinity necessary for maintaining dielectric breakdown strength. The upper limit is preferably 150 J/g or less, more preferably 140 J/g or less, and even more preferably 130 J/g or less. A fusion enthalpy in initial heating being 150 J/g or less allows the film to have suitable thin film stretchability. The fusion enthalpy is a value measured in the first run of differential scanning calorimetry, specifically a value measured according to the method described in the Examples.

The biaxially stretched polypropylene film of the present invention preferably has a crystallization peak temperature of 112°C or higher and lower than 120°C (119.9°C or lower) when initially heated from 30°C to 280°C at a rate of 20°C/min in a nitrogen atmosphere, then kept at 280°C for 5 minutes, and initially cooled to 30°C at a rate of 20°C/min in differential scanning calorimetry. The lower limit is preferably 112°C or higher, more preferably 114°C or higher, and even more preferably 116°C or higher. A crystallization peak temperature in initial cooling being 112°C or higher allows for control of the size of spherulites generated during the cooling process of the melt-extruded resin sheet to be small, suppressing the formation of insulation defects occurring during the stretching process to a low level. The upper limit is preferably 120°C or lower (119.9°C or lower), more preferably 119°C or lower, and even more preferably 118°C or lower. A crystallization peak temperature in initial cooling being 120°C or lower allows for the formation of a rough surface due to crystal transformation. The crystallization peak temperature is a value measured in the first run of differential scanning calorimetry, specifically a value measured according to the method described in the Examples.

The biaxially stretched polypropylene film of the present invention preferably has a crystallization enthalpy of -150 J/g or more and -96 J/g or less when initially heated from 30°C to 280°C at a rate of 20°C/min in a nitrogen atmosphere nitrogen atmosphere, held at 280°C for 5 minutes, and then initially cooled to 30°C at a cooling rate of 20°C/min in differential scanning calorimetry. The lower limit is preferably -150 J/g or more, more preferably -130 J/g or more, even more preferably -120 J/g or more, and particularly preferably -110 J/g or more. A crystallization enthalpy in initial cooling being -150 J/g or more allows the film to have suitable thin film stretchability. The upper limit is preferably -96 J/g or less, more preferably -98 J/g or less, and even more preferably -100 J/g or less. A crystallization enthalpy in initial cooling being -96 J/g or less ensures the crystallinity necessary for maintaining dielectric breakdown strength. The crystallization enthalpy is a value measured in the first run of differential scanning calorimetry, specifically a value measured according to the method described in the Examples.

## 2. Method for Producing Biaxially Stretched Polypropylene Film

The method for producing the biaxially stretched polypropylene film of the present invention is not particularly limited. For example, the film can be produced according to a production method including the step of melting a polypropylene resin composition containing at least a linear polypropylene resin A and a branched polypropylene resin B preferably at a temperature of 225°C or higher and 270°C or lower at a shear rate of 2000 s$^{-1}$ or more and 15000 s$^{-1}$ or less. The production method is described below by using examples.

The production method can provide a biaxially stretched polypropylene film that exhibits excellent dielectric breakdown strength at high temperatures. The reason why a biaxially stretched polypropylene film exhibiting excellent dielectric breakdown strength can be provided is believed to be due to the sea-island phase-separated structure of the cast sheet (in particular, an appropriate island size) that is formed by using two specific, different polypropylene resins.

The method of mixing the resins used in the production method above is not particularly limited. Examples include a method of dry-blending polymer powder or pellets of a base resin and a blend resin using a mixer or the like, and a method of supplying polymer powder or pellets of a base resin and a blend resin to a kneader and melt-kneading them to obtain a kneaded product.

The mixer and kneader are not particularly limited. The kneader may be a single-screw type, a twin-screw type, or a multi-screw type equipped with three or more screws. The screws of the kneader of a twin or multi-screw type may rotate in the same direction or in different directions.

In kneading by melt kneading, the kneading temperature is not particularly limited as long as a desired kneaded product is obtained. The temperature is generally within the range of 200°C or higher and 300°C or lower; from the viewpoint of limiting the deterioration of resin, the temperature is preferably within the range of 230°C or higher and 270°C or lower. In order to limit deterioration during the kneading and mixing of resins, the kneader may be purged with an inert gas, such as nitrogen. The melt-kneaded resin may be pelletized to an appropriate size by using a commonly used pelletizer. In this manner, raw-material resin pellets of mixed polypropylenes can be prepared.

The polypropylene resin composition may contain additives. The additives for use may be the same as those explained for the biaxially stretched polypropylene film of the present invention. The polypropylene resin composition may contain such additives in an amount that does not adversely affect the biaxially stretched polypropylene film.

In the method for producing a biaxially stretched polypropylene film, first, polypropylene resin pellets, dry-mixed polypropylene resin pellets, or mixed polypropylene resin pellets prepared by melt kneading beforehand are fed into an extruder and melted by heating.

The polypropylene resin composition is preferably melted at a temperature of 170°C or higher and 320°C or lower. Specifically, the extruder temperature during melting of the polypropylene resin composition by heating is set to 225°C or higher and 270°C or lower. This allows a sea-island phase-separated structure to form at the time of cast-sheet molding, described below, and enables the production of a biaxially stretched polypropylene film with excellent dielectric breakdown strength at high temperatures.

The polypropylene resin composition is preferably melted at a temperature of 225°C or higher and 270°C or lower at a shear rate of 2000 s$^{-1}$ or more and 15000 s$^{-1}$ or less. This allows a sea-island phase-separated structure to form at the time of cast-sheet molding, described below, and enables the production of a biaxially stretched polypropylene film with excellent dielectric breakdown strength at high temperatures. A shear rate of less than 2000 s$^{-1}$ makes the extrusion amount not constant, resulting in an irregular shape and/or irregular dimensions of the raw sheet or regular changes in shape and/or dimensions, and this may make the raw sheet prone to breakage during transportation or stretching. Additionally, a shear rate exceeding 15000 s$^{-1}$ allows a non-melted material to be extruded due to a phenomenon called "break-up" in the extruder, and may make it easier for breakage to occur during stretching due to the failure to obtain a uniform raw sheet, or allows excessive heat to generate during passing of the resin through the tip clearance and significantly deteriorate the polypropylene resin composition, thereby possibly decreasing the dielectric breakdown strength of the film obtained by stretching even if a uniform raw sheet is obtained. The shear rate can be adjusted by changing the cylinder diameter, the screw rotation speed, and the groove depth of screws of the extruder.

The shear rate is preferably 2000 s$^{-1}$ or more and 10000 s$^{-1}$ or less, and more preferably 2000 s$^{-1}$ or more and 2300 s$^{-1}$ or less. A shear rate within the range makes it easier to obtain a biaxially stretched polypropylene film with a weight fraction w of 2.6% or more and 4.0% or less, and leads to further improved heat resistance of a film capacitor containing the biaxially stretched polypropylene film as a capacitor dielectric.

Next, the molten polypropylene resin composition is extruded into a sheet using a T-die, and then cooled and solidified on at least one metal drum, thereby forming an unstretched cast sheet. The surface temperature of the metal drum (the temperature of the metal drum that first comes into contact with the extruded sheet) is preferably 10°C or higher and 105°C or lower, and more preferably 15°C or higher and 100°C or lower. The surface temperature of the metal drum can be determined according to the physical properties of the polypropylene resins used. A surface temperature of the metal drum being lower than 10°C makes it difficult for the raw sheet to have good sheet formability, thus making the raw sheet prone to uneven stretching or breakage during film formation by stretching.

The thickness of the cast sheet is not particularly limited, and is preferably 0.05 mm or more and 2 mm or less, and more preferably 0.1 mm or more and 1 mm or less.

The biaxially stretched polypropylene film can be produced by subjecting the cast sheet to biaxial stretching. The stretching is preferably biaxial stretching in which the film is oriented in both the longitudinal and transverse directions, and the stretching method is preferably a sequential biaxial stretching method. In the sequential biaxial stretching method, for example, a cast sheet is first kept at a temperature of 100°C or higher and 180°C or lower (preferably 120°C or higher and 170°C or lower) and passed between rolls of different speeds to be stretched in the machine direction. The draw ratio in the machine direction is preferably 3.0 times or more and 7.0 times or less, and more preferably 4.0 times or more and 6.0 times or less. The sheet is then guided into a tenter and stretched in the transverse direction. The temperature during stretching in the transverse direction is preferably 160°C or higher and 180°C or lower, and the draw ratio in the transverse direction is preferably 3.0 times or more and 11.0 times or less. After being stretched in the transverse direction, the film is relaxed, heat-fixed, and wound up.

A biaxially stretched polypropylene film can be produced according to the production method described above.

From the viewpoint of further improving adhesive properties in a subsequent step, such as a metal deposition processing step, the biaxially stretched polypropylene film may be subjected to corona discharge treatment online or offline after completion of the stretching and heat-fixation step. The corona discharge treatment can be performed according to a known method. It is preferable to use air, carbon dioxide gas, nitrogen gas, or a mixture of these gases as the atmospheric gas.

The biaxially stretched polypropylene film of the present invention produced according to the production method above, even with a small thickness of 6.0 μm or less, has excellent dielectric breakdown strength when a DC voltage is applied at a high temperature of about 120°C (100°C to 125°C) and excellent dielectric breakdown strength when an AC voltage is applied; additionally, such a biaxially stretched polypropylene film of the present invention also has excellent heat shrinkage resistance in that heat shrinkage is suppressed at high temperatures up to about 120°C. Thus, the biaxially stretched polypropylene film has excellent thermal shock resistance in that thermal compaction (deformation) of capacitors can be limited in repeated use between the high and low temperatures assumed to be found in an engine compartment. Therefore, the biaxially stretched polypropylene film of the present invention is suitable for use in capacitors, and can be preferably used as a dielectric of a capacitor constituting an inverter in hybrid or electric vehicles.

3. Metallized Film, Capacitor, and Their Production Methods

The metallized film of the present invention is a metallized film including a metal layer on at least one surface of the biaxially stretched polypropylene film described above.

The metal layer functions as an electrode. Examples of metals for use in the metal layer include single metals, such as zinc, lead, silver, chromium, aluminum, copper, and nickel, mixtures of these metals, and alloys of these metals. Of these, zinc and aluminum are preferred from the viewpoint of their environmental impact, economic efficiency, and excellent capacitor performance.

The method for laminating a metal layer on at least one surface (one side or both sides) of the biaxially stretched polypropylene film is not particularly limited, and examples include a vacuum vapor deposition method and a sputtering method. From the viewpoint of excellent productivity and economic efficiency, a vacuum vapor deposition method is preferred. Examples of vacuum vapor deposition methods include a crucible method and a wire method, and the most suitable method can be selected as appropriate.

The margin pattern in laminating a metal layer by vapor deposition is not particularly limited. From the viewpoint of further improved safety of capacitors and further limited destruction and short circuits of capacitors, it is preferable to apply a pattern including a "special margin," such as a fishnet pattern or a T-margin pattern, on one side of the biaxially stretched polypropylene film.

The method for forming a margin is not particularly limited, and the margin may be formed according to a known method, such as a tape method or an oil method.

The thickness of the metallized film of the present invention is not particularly limited, and is preferably 1.8 μm or more and 3.0 μm or less, more preferably 2.0 μm or more and 2.8 μm or less.

The capacitor of the present invention is a capacitor containing the metallized film described above. The metallized film of the present disclosure can be laminated or rolled into a film capacitor according to a known method.

The film capacitor may have a structure in which a plurality of metallized films are laminated, or may contain a wound metallized film. Such film capacitors can be suitably used in capacitors for inverter power supply devices that control drive motors of vehicles, such as electric vehicles and hybrid vehicles. The film capacitors can also be suitably used in railway vehicles, wind power generation, solar power generation, general home appliances, etc.

Examples

The present invention is described below in detail with reference to Examples and Comparative Examples. However, the present invention is not limited to these Examples.

Table 1 shows the raw materials used in the Examples and Comparative Examples.

Table 1

| | | Resin Product | Manufacturer | MFR (g/10 min) | Melt Tension (g) | Mn | Mw | Mz | Mw/Mn | Mz/Mn | HI (%) | Mesopentad Fraction (%) |
|---|---|---|---|---|---|---|---|---|---|---|---|---|
| Linear PP | PP A-1 | HC300BF | Borealis AG | 4.0 | Less than 1 | 42000 | 340000 | 1500000 | 8.1 | 35.7 | 98.5 | 97.4 |
| | PP A-2 | S802M | Korea Petrochemical Ind. Co., Ltd. | 2.3 | Less than 1 | 46000 | 380000 | 1600000 | 8.3 | 34.8 | 98.8 | 98.9 |
| | PP A-3 | HPT-S | Korea Petrochemical Ind. Co., Ltd. | 3.2 | Less than 1 | 38000 | 340000 | 1400000 | 8.9 | 36.8 | 98.5 | 98.5 |
| | PP A-4 | Resin X | Prime Polymer Co., Ltd. | 4.6 | Less than 1 | 33000 | 310000 | 1400000 | 9.4 | 42.4 | 97.3 | 97.2 |
| Branched PP | PP B-1 | EX6000 | Japan Polypropylene Corporation | (2.9) | (9) | 115000 | 480000 | 1600000 | 4.2 | 13.9 | | |
| | PP B-2 | M FX6 | Japan Polypropylene Corporation | 2(2.8) | 13(17) | 160000 | 380000 | 840000 | 2.4 | 5.3 | | |
| | PP B-3 | MFX8 | Japan Polypropylene Corporation | 1(1.3) | 24(25) | 110000 | 400000 | 880000 | 3.6 | 8.0 | | |

The values in parentheses indicate catalog values.

Examples 1 to 9 and Comparative Examples 1 to 7

Production of Biaxially Stretched Polypropylene Film

The raw materials shown in Table 1 were subjected to dry blending in the mixing ratios (ratio by mass) shown in Table 2. The resin was then fed into an extruder and melted at a resin temperature of 230°C, after which the melted resin was extruded using a T-die and solidified by wrapping it around a metal drum whose surface temperature was kept at 20°C to produce an unstretched cast sheet with a thickness of about 300 $\mu$m. The unstretched cast sheet was then stretched 5-fold in the machine direction and then 10-fold in the transverse direction at 165°C using a batch-type biaxial stretching machine (KARO IV, Brückner) to produce a biaxially stretched polypropylene film with a thickness of 6.0 $\mu$m.

Measurement Method

Various properties of each of the Examples and Comparative Examples were evaluated under the following measurement conditions.

<u>(1) Evaluation of Resin Properties</u>

Measurement of Number Average Molecular Weight (Mn), Weight Average Molecular Weight (Mw), z-Average Molecular Weight (Mz), Molecular Weight Distribution (Mw/Mn), Molecular Weight Distribution (Mz/Mn), and Differential Molecular Weight Distribution Value of Polypropylene

Using gel permeation chromatography (GPC), the number average molecular weight (Mn), weight average molecular weight (Mw), z-average molecular weight (Mz), molecular weight distribution (Mw/Mn), molecular weight distribution (Mz/Mn), and differential molecular weight distribution values of a distribution curve of polypropylene were measured under the following conditions.

A high-temperature GPC system with a built-in differential refractometer (RI) (HLC-8121GPC/HT model produced by Tosoh Corporation) was used. The columns used were three TSKgel GMHhr-H (20) HT columns (produced by Tosoh Corporation) connected together, and one TSKgel guard column HHR (30) column. The column temperature was set to 140°C, and an eluent, which was 1,2,4-trichlorobenzene containing 0.05 wt% 2,6-di-tert-butyl-p-cresol (common name: BHT), was allowed to flow at a flow rate of 1.0 ml/min to determine the number average molecular weight (Mn), weight average molecular weight (Mw), and z-average molecular weight (Mz). The molecular weight distribution (Mz/Mn) was determined from the values of Mz and Mn, and the molecular weight distribution (Mw/Mn) was determined from the values of Mw and **Mn.**

The measurement conditions were the following.

GPC system: HLC-8121GPC/HT (manufactured by Tosoh Corporation) Light scattering detector: DAWN EOS (Wyatt Technology)
Column: TSKgel guard column HHR (30) (7.8 mm ID x 7.5 cm) x 1 and TSKgel GMHhr-H (20) HT (7.8 mm ID x 30 cm) x 3 (manufactured by Tosoh Corporation)
Eluent: 1,2,4-trichlorobenzene containing 0.05 wt% BHT
Flow rate: 1.0 mL/min
Sample concentration: 2 mg/mL
Injection volume: 300 $\mu$L
Column temperature: 140°C
System temperature: 40°C
Pretreatment: The sample was precisely weighed, and the eluent was added thereto, followed by dissolution by shaking at 140°C for 1 hour; hot filtration was then performed using a 0.5 $\mu$m sintered metal filter.
Calibration curve: A calibration curve of a quintic approximated curve was prepared using polystyrene standard produced by Tosoh Corporation. However, the molecular weight was converted into the molecular weight of polypropylene using the Q-factor.

From the obtained calibration curve and SEC chromatogram, an integral molecular weight distribution curve was determined by plotting the molecular weight values (logarithmic values) on the horizontal axis and the integral values of the concentration fractions on the vertical axis by using analysis software for the measuring device. Additionally, the differential value of the integral molecular weight distribution curve (slope of the integral molecular weight distribution curve) at each molecular weight was determined; the molecular weight values (logarithmic values) were then plotted on the horizontal axis, and the differential values were plotted on the vertical axis to determine a differential molecular weight distribution curve.

From these curves, the number average molecular weight Mn, weight average molecular weight Mw, and Z-average molecular weight Mz were determined. The molecular weight distribution (Mw/Mn) was also determined from the Mw and Mn values. The molecular weight distribution (Mz/Mn) was also determined from the Mz and Mn values.

Heptane Insoluble (HI) Content

Each of the polypropylene resins used as raw materials in the Examples and Comparative Examples was press-molded into a size of 10 mm x 35 mm x 0.3 mm to prepare a measurement sample of about 3 g. Then, about 150 mL of heptane was added, and Soxhlet extraction was performed for 8 hours. The heptane-insoluble content was calculated from the sample mass before and after extraction.

Mesopentad Fraction

Each of the polypropylene resins used as raw materials in the Examples and Comparative Examples was dissolved in a solvent and measured for the mesopentad fraction using a high-temperature Fourier transform nuclear magnetic resonator (high-temperature FT-NMR) under the following conditions.

High-temperature nuclear magnetic resonator (NMR): High-temperature Fourier transform nuclear magnetic resonator (high-temperature FT-NMR), manufactured by JEOL Ltd., model number: JNM-ECP500
Observed nucleus: 13C (125 MHz)
Measurement temperature: 135°C
Solvent: o-dichlorobenzene (ODCB: mixed solvent of ODCB and deuterated ODCB (mixing ratio = 4/1))
Measurement mode: Single-pulse proton broadband decoupling Pulse width: 9.1 μsec (45° pulse)
Pulse interval: 5.5 sec
Accumulation count: 4,500 times
Shift standard: $CH_3$ (mmmm) = 21.7 ppm

The pentad fraction, which indicates the degree of stereoregularity, was calculated as a percentage (%) from the integral intensity of each signal derived from a combination of five sequences (pentad) composed of sequences arranged in the same direction, i.e., "meso (m)," and sequences arranged in different directions, i.e., "racemo (r)," (e.g., mmmm or mrrm). For the assignment of each signal derived from mmmm, mrrm, etc., a description regarding spectra, such as T. Hayashi et al., Polymer, Vol. 29, page 138, (1988), was referred to.

Melt Tension

Using a Capillograph 1B manufactured by Toyo Seiki Seisaku-sho, Ltd., each of the raw material resins used in the Examples and Comparative Examples was extruded into a string shape under the following conditions. The tension detected by a pulley when the resin was wound up around a roller was taken as the melt tension.

Capillary: diameter: 2.0 mm, length: 40 mm
Cylinder diameter: 9.55 mm
Cylinder extrusion speed: 20 mm/min
Winding speed: 4.0 m/min
Temperature: 230°C

An extremely high degree of melt tension may result in breakage of the resin at a take-up speed of 4.0 m/min. In such a case, the take-up speed was reduced, and the tension at the highest possible take-up speed was defined as the melt tension.

Dynamic Viscoelasticity (Storage Modulus (E'))

The measurement conditions and procedures were as described below.
The dynamic viscoelasticity analyzer used was a viscoelasticity analyzer manufactured by Seiko Instruments Inc. (model: DMS6100). A measurement sample was prepared by cutting a cast sheet extruded in each blending ratio shown in Table 2 into a strip of 40 mm in the vertical direction and 8 mm in the horizontal direction and measured for the temperature dependency of the cast sheet under the measurement conditions shown below in accordance with JIS-K7244 (1999 edition).

Test mode: Tensile mode
Chuck distance: 20 mm
Vibration frequency: 1 Hz
Strain amplitude: 10 μm
Tension gain: 1.2
Initial force amplitude: 100 mN
Temperature range: -60 to 170°C
Heating rate: 5°C/min
Measurement atmosphere: Nitrogen
Measurement thickness: 300 μm

From the measurement results, the storage modulus (E') at a temperature dispersion of 160°C was determined.

Melt Flow Rate (MFR)

The melt flow rate (MFR) of the resin pellets (raw material) used in the Examples and Comparative Examples was measured in accordance with JIS K 7210 under condition M by using a melt indexer manufactured by Toyo Seiki Co., Ltd. Specifically, first, a sample weighed to 4 g was placed in a cylinder adjusted to a test temperature of 230°C and preheated for 3.5 minutes under a load of 2.16 kg. Thereafter, the weight of the sample extruded from the bottom hole in 30 seconds was measured, and the MFR (unit: g/10 min) was determined. This measurement was performed three times, and the average value was taken as the measured MFR value.

(2) Evaluation of Properties of Biaxially Stretched Polypropylene Film

Measurement of Dielectric Breakdown Strength: Direct Current (DC)

With the electrode configuration described in JIS C2151 (2006) 17.2.2 (flat electrode method), the dielectric breakdown voltage (BDV) of a biaxially stretched polypropylene film at 120°C was measured 16 times under the following test conditions. The applied voltage defined as BDV was one at the time a leakage current of the upper limit reference value described below was detected during voltage increase. The BDV was divided by the thickness (μm) of the film, and the top two and bottom two values were excluded from the 16 measurement results, and the average of these 12 values was taken as the dielectric breakdown strength DCES (V/μm).

Test specimen: about 150 mm x 150 mm
Conditioning of test specimen: 30 minutes under ambient conditions
Power supply: DC
Atmosphere: 120°C in air
Testing machine: TOS9213AS DC withstand voltage/insulation resistance tester manufactured by Kikusui Electronics Corporation
Voltage increase rate: 100 V/s
Current detection response speed: MID
Upper limit reference value: 5 mA

Melting Peak Temperature During Initial Heating

A 5 mg sample was cut out from a biaxially stretched polypropylene film, sealed in an aluminum pan, and subjected to power-compensated differential scanning calorimetry by using a differential scanning calorimeter (Diamond DSC manufactured by PerkinElmer). In the measurement, the temperature was initially raised from 30°C to 280°C at a rate of 20°C/min in a nitrogen atmosphere. From the results of the initial heating, the melting peak temperature was determined.

Fusion Enthalpy During Initial Heating

A 5 mg sample was cut out from a biaxially stretched polypropylene film, sealed in an aluminum pan, and subjected to power-compensated differential scanning calorimetry using a differential scanning calorimeter (Diamond DSC manufactured by PerkinElmer). In the measurement, the temperature was initially raised from 30°C to 280°C at a rate of 20°C/min in a nitrogen atmosphere. From the results of the initial heating, the fusion enthalpy was determined.

Measurement of Crystallization Peak Temperature During Initial Cooling

In the first run, the sample was kept at 280°C for 5 minutes, then initially cooled to 30°C at a cooling rate of 20°C/min, and then kept at 30°C for 5 minutes. From the results of the initial cooling, the crystallization peak temperature was determined.

Measurement of Crystallization Enthalpy During Initial Cooling

In the first run, the sample was kept at 280°C for 5 minutes, then initially cooled to 30°C at a cooling rate of 20°C/min, and then kept at 30°C for 5 minutes. From the results of the initial cooling, the crystallization enthalpy was determined.

Film Thickness

The thickness of a biaxially stretched polypropylene film was measured by using an MEI-11 paper thickness measuring instrument (measurement pressure: 100 kPa, descending speed: 3 mm/sec, measurement probe: 16 mm in diameter, measurement force: 20.1 N) manufactured by Citizen Seimitsu Co., Ltd., at a temperature of 23±2°C and a humidity of 50±5% RH. A sample of 10 or more sheets stacked was cut out from a roll while being handled so as not to form wrinkles or trap air in the film during cutting. The ten-ply sample was measured five times, and the average value of the five measurements was divided by 10 to determine the thickness.

Measurement of β-crystal Fraction of Cast Sheet Before Biaxial Stretching

The β-crystal fraction was evaluated using the K value determined by X-ray diffraction intensity measurement. The X-ray diffraction intensity was measured under the conditions described below.
Measurement equipment: RINT-2200 X-ray diffractometer, manufactured by Rigaku Corporation
X-ray source: CuKα rays
Irradiation output: 40 KV-40 mA
Scattering slit: 1 deg
Receiving slit: 0.3 mm
Scanning speed: 1 deg/min

The K value was calculated from the obtained intensity curve using the following formula, as the ratio of a single diffraction peak derived from β crystals to the sum of the heights of three diffraction peaks derived from α crystals.

```
K value (intensity ratio: %) = Hβ/(Hβ + HαI + HαII + HαIII) x 100
```

wherein

Hβ is the intensity (height) of the peak corresponding to the crystalline diffraction of β crystals (2θ = 16 deg),
HαI is the intensity (height) of the peak corresponding to the crystalline diffraction of α crystals of the (110) plane,
HαII is the intensity (height) of the peak corresponding to the crystalline diffraction of α crystal of the (040) plane, and
HαIII is the intensity (height) of the peak corresponding to the crystalline diffraction of α crystals of the (130) plane.

Note that in all cases, the intensity (height) used was one excluding amorphous scattering.
Table 2 shows the results of evaluating the various properties described above for the Examples and Comparative Examples.

```
Table 2
```

| | | | | Example 1 | Example 2 | Example 3 | Example 4 | Example 5 | Example 6 | Example 7 | Example 8 | Example 9 | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|---|---|---|---|---|---|---|---|---|---|
| Amount | Linear PP A-1 | HC300BF | wt% | 95 | 90 | 85 | 96.9 | 96.9 | 95 | 90 | 62.9 | 62.9 | 100 | 65 | 65 | 99.5 | | | |
| | Linear PP A-2 | S802M | | | | | | | | | 34 | | | 35 | | | | 34 | |
| | Linear PP A-3 | HPT-S | | | | | | | | | | 34 | | | 35 | | | | |
| | Linear PP A-4 | Resin X | | | | | | | | | | | | | | | 100 | 62.9 | 80 |
| | Branched PP B-1 | EX6000 | | 5 | 10 | 15 | 3.1 | | | | | | | | | | | | |
| | Branched PP B-2 | MFX6 | | | | | | 3.1 | 5 | 10 | 3.1 | 3.1 | | | | | | 3.1 | 20 |
| | Branched PP B-3 | MFX8 | | | | | | | | | | | | | | 0.5 | | | |
| Dynamic Viscoelasticity | Storage Modulus E' @160°C | 22.50 to 31.00 | MPa | 24.31 | 24.19 | 25.17 | 24.34 | 22.97 | 24.80 | 23.91 | 27.53 | 27.09 | 17.90 | 21.31 | 21.33 | 22.15 | 14.39 | 31.01 | 33.68 |
| Electrical Properties | Dielectric Breakdown Strength@120°C | Ave. | $V_{DC}$/μm | 495 | 485 | 473 | 474 | 475 | 475 | 492 | 512 | 517 | 447 | 449 | 432 | 459 | 421 | 478 | 450 |
| | | σ | | 23 | 26 | 25 | 25 | 18 | 22 | 28 | 35 | 32 | 41 | 28 | 21 | 27 | 34 | 18 | 34 |
| | | min (Ave.-σ) | | 472 | 459 | 448 | 449 | 457 | 454 | 464 | 477 | 485 | 407 | 421 | 411 | 432 | 387 | 460 | 416 |
| Effect | Comparative Example 1 vs Examples 1 to 7 | >10.0 | % | 16.1 | 12.8 | 10.2 | 10.4 | 12.4 | 11.5 | 14.0 | - | - | 0.0 | 3.5 | 1.1 | 6.2 | -4.8 | - | 2.3 |
| | Comparative Example 2 vs Examples 6 and 9 | >10.0 | | - | - | - | - | - | - | - | 13.3 | 15.2 | - | 0.0 | - | - | | 9.2 | - |
| β-Crystal Formation | β-Crystal Fraction | | % | 16.5 | 13.6 | 13.8 | 16.8 | 18.9 | 18.8 | 19.4 | 19.2 | 19.5 | 8.1 | 7.0 | 9.0 | 18.5 | 8.4 | 18.1 | 16.1 |
| Thermal Analysis DSC | 1st-Heating (Initial Heating) Melting Peak Temperature | | °C | 168.7 | 168.9 | 168.5 | 168.5 | 168.8 | 169.3 | 168.7 | 169.5 | 169.0 | 168.6 | 169.5 | 168.9 | 169.0 | 168.4 | 169.0 | 168.1 |
| | 1st-Heating (Initial Heating) Fusion Enthalpy | | J/g | 124.8 | 121.4 | 123.7 | 123.6 | 122.5 | 125.6 | 125.8 | 124.4 | 125.3 | 124.3 | 124.8 | 125.9 | 127.1 | 128.2 | 126.7 | 127.7 |
| | 1st-Cooling (Initial Cooling) Crystallization Peak Temperature | | °C | 117.1 | 117.9 | 118.3 | 116.2 | 117.7 | 118.3 | 119.1 | 118.0 | 118.0 | 109.7 | 109.9 | 110.1 | 115.5 | 110.2 | 118.2 | 120.5 |
| | 1st-Cooling (Initial Cooling) Crystallization Enthalpy | | J/g | -101.9 | -100.1 | -96.3 | -100.8 | -101.4 | -101.7 | -101.3 | -101.6 | -101.9 | -98.6 | -98.3 | -99.3 | -101.1 | -98.0 | -102.1 | -99.4 |
| | 2nd-Heating (Second Heating) Melting Peak Temperature | | °C | 163.0 | 163.1 | 162.5 | 162.9 | 163.3 | 163.1 | 162.9 | 164.0 | 163.6 | 162.7 | 162.9 | 163.1 | 162.9 | 162.6 | 164.3 | 162.2 |
| | 2nd-Heating (Second Heating) Fusion Enthalpy | | J/g | 113.9 | 113.7 | 114.1 | 113.1 | 116.3 | 117.1 | 116.7 | 115.9 | 116.2 | 111.7 | 113.3 | 113.6 | 116.4 | 114.6 | 118.2 | 119.3 |

As is clear from the results in Table 2, the biaxially stretched polypropylene films of Examples 1 to 8, which satisfy the requirements of the present invention below, have high dielectric breakdown strength even at high temperatures:

(1) the ratio by mass of the linear polypropylene resin A to the branched polypropylene resin B, which is represented by the linear polypropylene resin A/the branched polypropylene resin B, is within the range of 99.0:1.0 to 85.0:15.0,
(2) the linear polypropylene resin A has a molecular weight distribution (Mw/Mn) of weight average molecular weight Mw and number average molecular weight Mn of 7.0 or more and 9.3 or less, and
(3) the biaxially stretched polypropylene film has a storage modulus (E') of 22.50 MPa or more and 31.00 MPa or less at a vibration frequency of 1 Hz and a temperature of 160°C.

Such an advantageous effect of the present invention can be understood, for example, from a comparison between Examples 1 to 7 and Comparative Example 1, in which one type of linear polypropylene resin A was used. The increase rate of dielectric breakdown strength at 120°C in Examples 1 to 7 is more than 10.0% as compared to that in Comparative Example 1. Additionally, for example, a comparison between Examples 8 to 9 and Comparative Example 2, in which two types of linear polypropylene resin A were used in combination, indicates that the increase rate in dielectric breakdown strength at 120°C in Examples 8 to 9 is more than 13.0% as compared to Comparative Example 2.

## Claims

1. A biaxially stretched polypropylene film comprising a linear polypropylene resin A and a branched polypropylene resin B,
wherein

(1) the ratio by mass of the linear polypropylene resin A to the branched polypropylene resin B, which is represented by the linear polypropylene resin A/the branched polypropylene resin B, is within the range of 99.0:1.0 to 85.0:15.0,
(2) the linear polypropylene resin A has a molecular weight distribution (Mw/Mn) of weight average molecular weight Mw and number average molecular weight Mn of 7.0 or more and 9.3 or less, and
(3) the biaxially stretched polypropylene film has a storage modulus (E') of 22.50 MPa or more and 31.00 MPa or less at a vibration frequency of 1 Hz and a temperature of 160°C.

2. The biaxially stretched polypropylene film according to claim 1, wherein the ratio by mass of the linear polypropylene resin A to the branched polypropylene resin B, which is represented by the linear polypropylene resin A/the branched polypropylene resin B, is within the range of 96.9:3.1 to 85.0:15.0.

3. The biaxially stretched polypropylene film according to claim 1 or 2, wherein the branched polypropylene resin B has a melt flow rate at 230°C of 2.0 g/10 min or more.

4. The biaxially stretched polypropylene film according to claim 1 or 2, wherein the branched polypropylene resin B has a melt tension at 230°C of 9 g/cm³ or more and 20 g/cm³ or less.

5. The biaxially stretched polypropylene film according to claim 1 or 2, wherein the storage modulus (E') is 22.97 MPa or more and 27.53 MPa or less.

6. The biaxially stretched polypropylene film according to claim 1 or 2, wherein the linear polypropylene resin A contains a linear polypropylene resin having a heptane-insoluble (HI) content of 98.5% or more.

7. The biaxially stretched polypropylene film according to claim 1 or 2,
   wherein

   the linear polypropylene resin A contains two types of linear polypropylene resins, which are a linear polypropylene resin A1 and a linear polypropylene resin A2,
   the linear polypropylene resin A1 has a mesopentad fraction of less than 98.0%, and
   the linear polypropylene resin A2 has a mesopentad fraction of 98.0% or more.

8. The biaxially stretched polypropylene film according to claim 1 or 2, wherein the biaxially stretched polypropylene film has a dielectric breakdown strength of 448 V/μm or more under DC voltage at 120°C (DCES 120°C).

9. The biaxially stretched polypropylene film according to claim 1 or 2, wherein the biaxially stretched polypropylene film has a melting peak temperature of 166°C or higher and 188°C or lower when initially heated from 30°C to 280°C at a rate of 20°C/min in a nitrogen atmosphere in differential scanning calorimetry.

10. The biaxially stretched polypropylene film according to claim 1 or 2, wherein the biaxially stretched polypropylene film has a crystallization peak temperature of 112°C or higher and lower than 120°C when initially heated from 30°C to 280°C at a rate of 20°C/min in a nitrogen atmosphere, then kept at 280°C for 5 minutes, and initially cooled to 30°C at a rate of 20°C/min in differential scanning calorimetry.

11. The biaxially stretched polypropylene film according to claim 1 or 2, wherein the biaxially stretched polypropylene film in the form of a cast sheet before biaxial stretching has a β-crystal fraction of 10% or more, the β-crystal fraction being the percentage of β-crystals in the total of α-crystals and the β-crystals.

12. The biaxially stretched polypropylene film according to claim 1 or 2, which is for use in a capacitor.

13. A metallized film comprising a metal layer on at least one surface of the biaxially stretched polypropylene film of claim 1 or 2.

14. The metallized film according to claim 13, having a thickness of 1.8 μm or more and 3.0 μm or less.

15. A capacitor comprising the metallized film of claim 13.

Fig. 1

DRAWINGS

Fig. 2

## INTERNATIONAL SEARCH REPORT

| International application No. |
| --- |
| **PCT/JP2023/032921** |

| A. | CLASSIFICATION OF SUBJECT MATTER |
| --- | --- |

*C08J 5/18*(2006.01)i; *B29C 55/12*(2006.01)i; *B32B 15/085*(2006.01)i; *C08L 23/12*(2006.01)i; *H01G 4/32*(2006.01)i
FI:  C08J5/18 CES; B29C55/12; C08L23/12; B32B15/085 Z; H01G4/32 511L

According to International Patent Classification (IPC) or to both national classification and IPC

| B. | FIELDS SEARCHED |
| --- | --- |

Minimum documentation searched (classification system followed by classification symbols)

C08J5/00-5/02; C08J5/12-5/22; B29C55/00-55/30; B29C61/00-61/10; B32B1/00-43/00; C08K3/00-13/08; C08L1/00-101/14; H01G4/00-4/10; H01G4/14-4/22; H01G4/224; H01G4/255-4/40; H01G13/00-17/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | WO 2016/051496 A1 (OJI HOLDINGS CORP.) 07 April 2016 (2016-04-07) claims 4, 7-8, paragraphs [0085]-[0089], [0148], [0162], tables 1, 2 | 1-6, 8-15 |
| A | | 7 |
| X | JP 2022-001638 A (OJI HOLDINGS CORP.) 06 January 2022 (2022-01-06) claims 2-3, 5-6, paragraphs [0083], [0099], [0129], [0164], examples, tables 1-3 | 1-15 |
| A | WO 2016/002281 A1 (OJI HOLDINGS CORP.) 07 January 2016 (2016-01-07) claims, examples | 1-15 |
| A | WO 2015/064653 A1 (IDEMITSU KOSAN CO., LTD.) 07 May 2015 (2015-05-07) claims, examples | 1-15 |
| A | WO 2021/085606 A1 (OJI HOLDINGS CORP.) 06 May 2021 (2021-05-06) claims, paragraph [0026] | 1-15 |
| A | JP 2007-290380 A (TORAY INDUSTRIES, INC.) 08 November 2007 (2007-11-08) claim 4, examples | 1-15 |

| ✓ Further documents are listed in the continuation of Box C. | ✓ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **20 November 2023** | **05 December 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT

| International application No. |
| --- |
| **PCT/JP2023/032921** |

### C. DOCUMENTS CONSIDERED TO BE RELEVANT

| Category* | Citation of document, with indication, where appropriate, of the relevant passages | Relevant to claim No. |
| --- | --- | --- |
| P, X | JP 2023-124523 A (OJI HOLDINGS CORP.) 06 September 2023 (2023-09-06)<br>claims, examples | 1-15 |

Form PCT/ISA/210 (second sheet) (January 2015)

**EP 4 588 962 A1**

**INTERNATIONAL SEARCH REPORT**
**Information on patent family members**

International application No.

**PCT/JP2023/032921**

| Patent document cited in search report | | | Publication date (day/month/year) | Patent family member(s) | | | Publication date (day/month/year) |
|---|---|---|---|---|---|---|---|
| WO | 2016/051496 | A1 | 07 April 2016 | EP | 3202825 | A1 | |
| | | | | claims 4, 7-8, paragraphs [0083]-[0087], [0146], [0164], [0165], tables 1, 2 | | | |
| | | | | CN | 106795300 | A | |
| | | | | KR | 10-2017-0062448 | A | |
| JP | 2022-001638 | A | 06 January 2022 | US | 2023/0044276 | A1 | |
| | | | | claims 2-3, 5-6, paragraphs [0273], [0290], [0324], [0466], examples, tables 1-3 | | | |
| | | | | EP | 3733743 | A1 | |
| | | | | KR | 10-2020-0098502 | A | |
| | | | | CN | 111566149 | A | |
| WO | 2016/002281 | A1 | 07 January 2016 | US | 2018/0208751 | A1 | |
| | | | | claims, examples | | | |
| | | | | EP | 3163592 | A1 | |
| | | | | KR | 10-2017-0023876 | A | |
| | | | | CN | 106663534 | A | |
| WO | 2015/064653 | A1 | 07 May 2015 | US | 2016/0237268 | A1 | |
| | | | | claims, examples | | | |
| | | | | EP | 3064547 | A1 | |
| | | | | CN | 105658722 | A | |
| WO | 2021/085606 | A1 | 06 May 2021 | CN | 114599715 | A | |
| | | | | KR | 10-2022-0088435 | A | |
| JP | 2007-290380 | A | 08 November 2007 | (Family: none) | | | |
| JP | 2023-124523 | A | 06 September 2023 | (Family: none) | | | |

Form PCT/ISA/210 (patent family annex) (January 2015)

24

## REFERENCES CITED IN THE DESCRIPTION

**Patent documents cited in the description**

- JP 2007084813 A

**Non-patent literature cited in the description**

- **T. HAYASHI et al.** *Polymer*, 1988, vol. 29, 138